# EUROPEAN PATENT APPLICATION

(11) **EP 1 571 419 A2**
(43) Date of publication of application: **07.09.2005**
(21) Application number: 05012793.5
(22) Date of filing: 19.05.2004
(51) Int. Cl.: G01C 21/34, G08G 1/0968

(54) **Navigation routing system and method**

(30) Priority: 03.11.2003 US 700243
(62) Divisional of application: 04011922.4
(71) Applicant: Hewlett-Packard Development Company, L.P., Texas 77070 (US)
(72) Inventor: Simske, Steven J., Fort Collins CO 80525 (US)
(74) Representative: Schoppe, Fritz

(57) **Abstract**

A navigation routing system (10) comprises a navigation guide (50) adapted to receive a travel itinerary (71) from a requesting device (14). The travel itinerary (71) comprises at least two route segments (85). The navigation guide (50) is also adapted to automatically determine a time-optimized route segment sequence for the travel itinerary (71).

## Description

### TECHNICAL FIELD OF THE INVENTION

The present invention relates generally to the field of navigation systems and, more particularly, to a navigation routing system and method.

### BACKGROUND OF THE INVENTION

Several types of systems or methods for providing traffic and/or routing information to motorists exist. For example, most motorists are familiar with radio broadcasts that provide traffic information during peak traffic periods throughout the day. These radio broadcasts generally use aerial observation techniques or remote camera monitoring to obtain the traffic-related information. However, the traffic-related information is only periodically broadcast to listeners--for example, every ten or fifteen minutes--such that a motorist may encounter adverse traffic conditions before hearing a broadcast of the traffic conditions. Additionally, even after hearing about adverse traffic conditions, the motorist may not be familiar with alternate routes for avoiding the adverse traffic condition.

Various types of navigation systems may also be used by motorists to plan a route from a current location to a selected destination. For example, vehicles may be equipped with a global positioning system (GPS) receiver which may be used to determine routing information from the motorist's current location to the selected destination. Briefly, a global positioning system generally includes multiple orbiting satellites that transmit radio signals of a known format. A GPS receiver located on or near the earth's surface receives the signals from multiple GPS satellites (i.e., three geosynchronous satellites orbiting the earth) and computes the position of the receiver in three-dimensional space. Thus, vehicles equipped with a GPS receiver may input a selected destination to an onboard computer system to automatically determine routing information from a current location to a selected destination. GPS navigation systems do not accommodate multiple-stop or multiple-segment route determination.

### SUMMARY OF THE INVENTION

In accordance with one embodiment of the present invention, a navigation routing system comprises a navigation guide adapted to receive a travel itinerary from a requesting device. The travel itinerary comprises at least two route segments. The navigation guide is also adapted to automatically determine a time-optimized route segment sequence for the travel itinerary.

In accordance with another embodiment of the present invention, a navigation routing method comprises receiving a navigation request for a travel itinerary from a requesting device where the travel itinerary comprises at least two route segments. The method also comprises automatically determining a time-optimized route segment sequence for the travel itinerary.

In accordance with yet another embodiment of the present invention, a navigation routing system comprises a navigation guide adapted to receive a travel itinerary request from a user. The navigation guide is adapted to automatically determine a time-optimized origination time for the travel itinerary.

### BRIEF DESCRIPTION OF THE DRAWINGS

For a more complete understanding of the present invention and the advantages thereof, reference is now made to the following descriptions taken in connection with the accompanying drawings in which:

FIGURE 1 is a diagram illustrating an embodiment of a navigation routing system in accordance with the present invention;

FIGURE 2 is a flow chart illustrating an embodiment of a navigation routing method in accordance with the present invention; and

FIGURE 3 is a flow chart illustrating another embodiment of a navigation routing method in accordance with the present invention.

### DETAILED DESCRIPTION OF THE DRAWINGS

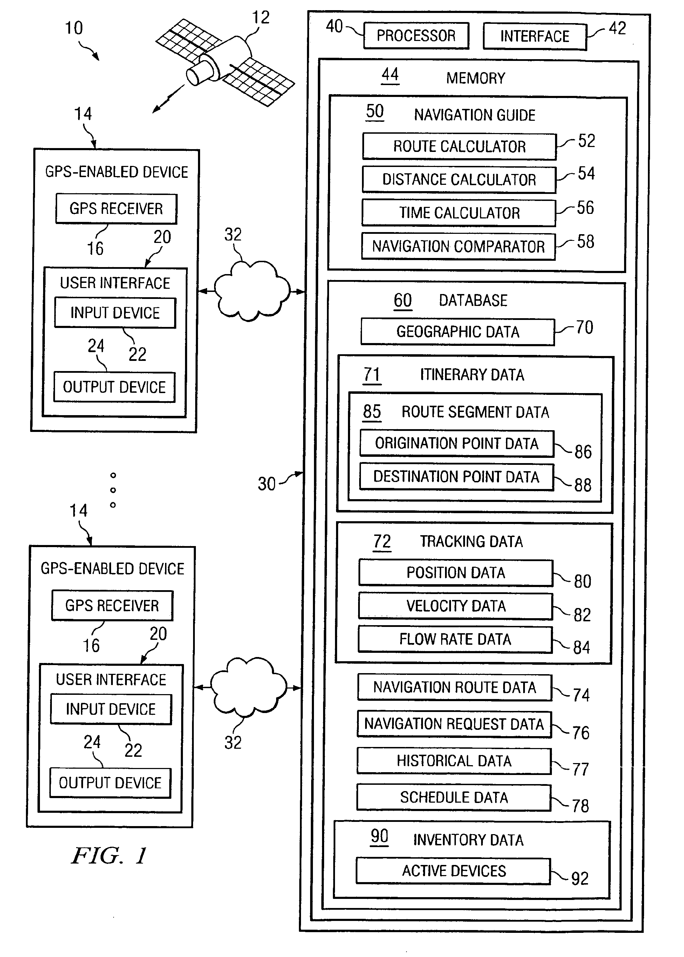

The preferred embodiments of the present invention and the advantages thereof are best understood by referring to FIGURES 1-3 of the drawings, like numerals being used for like and corresponding parts of the various drawings.

FIGURE 1 is a diagram illustrating an embodiment of a navigation routing system 10 in accordance with the present invention. Briefly, system 10 enables a user to input or select a plurality of desired travel stops or destinations for a particular travel itinerary. System 10 provides travel or navigation instructions to the user to enable the user to travel to the corresponding desired destinations. For example, in some embodiments, portable or mobile global positioning system (GPS)-enabled devices are used to analyze movement or flow rates of traffic for various routes associated with the desired travel destinations such that a time-optimized navigation route segment sequence for each leg or segment of the itinerary may be determined for traveling to each of the desired destinations. In some embodiments, historical traffic and/or flow patterns may be evaluated to determine a time-optimized navigation route segment sequence for each segment of the travel itinerary. For example, in one embodiment, a user of a portable or mobile GPS-enabled electronic device, such as a portable phone or other device, may request travel directions and/or a navigation route segment sequence from a current location to a desired quantity of selected or identified destinations. The desired destinations may be associated with destinations for product delivery, tour destinations, shopping or errand destinations, or any other points of interest. Based on GPS tracking information obtained from other GPS-enabled devices along various available navigation routes to the desired destinations, evaluating historical traffic flow patterns for various navigation routes corresponding to the desired destinations, and/or evaluating scheduled conditions affecting travel, a time-optimized navigation route segment sequence through the desired destinations may be provided for the request. Additionally, a time-optimized origination time for beginning travel of the travel itinerary may also be provided. Thus, system 10 automatically determines a time-optimized order in which the destinations should be visited and determines a time-optimized navigation route to each of the destinations by evaluating various conditions affecting, or that may affect, travel along a desired travel itinerary.

In the embodiment illustrated in FIGURE 1, system 10 comprises a satellite network or system 12 for transmitting global positioning signals to GPS-enabled units or devices 14. Devices 14 may comprise a portable telephone, laptop computer, pager, personal digital assistant, or any other type of portable or mobile unit or device having a GPS receiver 16 for receiving the global positioning signals from satellite system 12. As used herein, the term "portable" relates to any movable object such that global positioning information may be acquired relating to movement of GPS receiver 16 of such object. Thus, it should be understood that device 14 may comprise a motorized object (e.g., a car, truck, motorcycle, motorized scooter, etc.), a non-motorized object (e.g., a bicycle, inline skates, skateboard, etc.), or any other type of movable object equipped with a GPS receiver 16. In the embodiment illustrated in FIGURE 1, each device 14 may also comprise a user interface 20 for communicating information to and from device 14. For example, each user interface 20 may comprise an input device 22 and an output device 24. Input device 22 may comprise any device or object for enabling information to be input into device 14 including, but not limited to, a keypad, touch-based liquid crystal display screen, or microphone. Output device 24 may comprise any type of device or object for receiving the output of information from device 14 including, but not limited to, any device for providing audible and/or visual information to a user of device 14. However, it should be understood that device 14 may also comprise only receiver 16 to accommodate tracking of device 14 without accommodating input and/or output functionality via input device 22 or output device 24, respectively.

In FIGURE 1, system 10 also comprises a navigation controller 30 for receiving global positioning system information from devices 14 and providing to a requesting device 14 navigation instructions corresponding to requested or desired destinations. As illustrated in FIGURE 1, each device 14 is communicatively linked to navigation controller 30 via a wireless communication network 32 to accommodate information transfer between devices 14 and navigation controller 30. In the embodiment illustrated in FIGURE 1, navigation controller 30 comprises a processor 40, an interface 42, and a memory 44. Interface 42 provides a platform for the communication of information between devices 14 and navigation controller 30. For example, in operation, a user of device 14 may use input device 22 to input or select a desired travel itinerary comprising a plurality of destinations or travel stops. The request is transmitted via communication network 32 to navigation controller 30. Additionally, GPS information corresponding to the requesting device 14 and other devices 14 is received by navigation controller 30 via communication networks 32. After determining a time-optimized navigation route segment sequence for the desired destinations and/or determining time-optimized navigation routes between the desired destinations, the determined navigation route segment sequence and navigation travel instructions are transmitted to the requesting device 14 via communication network 32.

In the embodiment illustrated in FIGURE 1, navigation controller 30 comprises a navigation guide 50 executable by processor 40. Navigation guide 50 may comprise software, hardware, or a combination of software and hardware. In FIGURE 1, navigation guide 50 is illustrated as being stored in memory 44 so as to be executable by processor 40; however, it should be understood that navigation guide 50 may be otherwise stored, even remotely, so as to be accessible and executable by processor 40. In the embodiment illustrated in FIGURE 1, navigation guide 50 comprises a route calculator 52, a distance calculator 54, a time calculator 56, and a navigation comparator 58. Route calculator 52, distance calculator 54, time calculator 56, and navigation comparator 58 may comprise software, hardware, or a combination of software and hardware. Briefly, route calculator 52 identifies various available routes corresponding to the destinations designated by the user of one of devices 14 from a current location of the requesting device 14 to each of the designated destinations and available navigation routes between the designated destinations. Distance calculator 54 determines a travel distance corresponding to each available route identified by route calculator 52. Time calculator 56 determines a travel time for each available route identified by route calculator 52 using GPS-based tracking information for devices 14 traveling along the identified available routes. Navigation comparator 58 compares the available navigation routes and corresponding travel time information and selects a time-optimized navigation route segment sequence and associated navigation travel instructions for the request.

As illustrated in FIGURE 1, navigation controller 30 also comprises a database 60 stored in memory 44. In the embodiment illustrated in FIGURE 1, database 60 comprises geographic data 70, itinerary data 71, tracking data 72, navigation route data 74, navigation request data 76, historical data 77, schedule data 78, and inventory data 90. Geographic data 70 comprises information associated with the geographic characteristics of a particular region corresponding to the locations of devices 14. For example, geographic data 70 may comprise information associated with street locations, street intersections, building or point-of-interest locations, traffic signal location information, and any other type of information corresponding to a particular geographic region corresponding to a location of devices 14. Geographic data 70 may be partitioned into various regions based on a regional location of a requesting device 14. Thus, in response to a navigation request by a user, corresponding regional geographic data 70 is acquired or accessed for determining the time-optimized navigation route segment sequence and navigation travel instructions for the user.

Itinerary data 71 comprises information associated with a desired travel itinerary such as various travel destinations or locations designated or selected by the user. For example, itinerary data 71 may comprise a listing of destinations associated with product deliveries, tour destinations, shopping destinations, or other points of interest. In the illustrated embodiment, itinerary data 71 comprises route segment data 85 having information associated with each leg or segment of a desired travel itinerary 71. In the embodiment illustrated in FIGURE 1, route segment data 85 comprises origination point data 86 and destination point data 88. Origination point data 86 comprises information associated with a current location of device 14 or a desired originating point of travel. Destination point data 88 comprises information associated with designated or selected travel destinations. Thus, the desired travel itinerary 71 may begin at origination point 86 and include a plurality of destination points 88 or, alternatively, the desired travel itinerary 71 may begin at origination point 86, include at least one destination point 88, and return to origination point 86. Thus, each route segment 85 of travel itinerary 71 may comprise travel between two destination points 88 or between a destination point 88 and an origination point 86. Thus, in some embodiments, an interface associated with input device 22 may be configured to receive a plurality of points 86,88 selected or identified by a user and, upon completion of the selection or identification of points 86,88 by a user, input the points 86,88 to navigation controller 30 as a desired itinerary 71.

Tracking data 72 comprises information associated with the location and movement of a particular device 14. For example, in the embodiment illustrated in FIGURE 1, tracking data 72 comprises position data 80, velocity data 82, and flow rate data 84. Position data 80 comprises information associated with a current position of a particular device 14 based on GPS information received from that device 14. Velocity data 82 comprises information associated with a traveling velocity of a particular device 14 based on multiple position locations of the particular device 14 measured over time. Flow rate data 84 comprises information associated with traffic flow for a particular navigation route based on velocity data 82 for each of a plurality of devices 14 traveling along a particular navigation route.

Navigation route data 74 comprises information associated with each available navigation route identified by route calculator 52 in response to a request by a particular device 14. Navigation route data 74 may also comprise information associated with a time-optimized navigation route segment sequence for the travel itinerary 71 determined by navigation guide 50. Navigation route data 74 may also comprise time-optimized travel information for each route segment 85 of the travel itinerary 71. Navigation request data 76 comprises information associated with the particular travel itinerary 71 input or selected by a particular device 14. For example, navigation request data 76 may comprise information associated with a current position of device 14, origination point 86 of travel, and/or requested or desired destination points 88 for the particular device 14 travel.

Historical data 77 comprises information associated with historical flow rates and/or traffic patterns for various navigation routes such that navigation guide 50 may predict flow rates and/or traffic patterns for various routes corresponding to the request. For example, navigation guide 50 may forecast or predict traffic flow rates and patterns for various navigation routes between destination points 88 and/or between origination point 86 and each destination point 88 for various time periods throughout the day to determine an optimal time-based route segment sequence for travel to the desired destination points 88. Thus, for example, even though a particular navigation route to or between particular destination points 88 may be the furthest distance (among all destination points 88 identified or selected by the user) from origination point 86, historical flow rate and/or traffic patterns may indicate that the particular destination point 88 should be visited early in the route segment sequence to avoid adverse traffic patterns and flow rates at a later time. Correspondingly, historical data 77 may also indicate that traffic patterns and flow rates for particular navigation routes are less adverse at particular time periods throughout the day, thereby enabling navigation guide 50 to select a particular time period in the navigation route segment sequence for placing certain destination points 88.

Schedule data 78 comprises information associated with known or scheduled travel conditions affecting traffic flow rates or patterns for the various available navigation routes. For example, schedule data 78 may comprise information associated with scheduled road construction or lane closures along the available navigation routes.

Inventory data 90 comprises information associated with active devices 92. As used herein, the term "active" relates to devices 14 currently in use by a user such as any device being in a power "on" mode or other state capable of acting on a request made by a user. For example, in one embodiment, navigation guide 50 may select a time-optimized navigation route segment sequence based on tracking data 72 corresponding only to active devices 92. In this embodiment, system 10 is configured to determine the time-optimized navigation route segment sequence based on the presumption that inactive devices 14 are not currently in transit along available navigation routes, thereby reducing the quantity of devices 14 that are tracked to determine the time-optimized navigation route. Preferably, system 10 is configured such that GPS information may be acquired for any device 14, whether active or inactive, such that GPS information may be readily acquired by navigation controller 30 from any device 14 of interest along a particular navigation route in order to select a time-optimized navigation route segment sequence for the request.

In operation, navigation controller 30 receives a request from a particular device 14 designating or selecting a particular travel itinerary 71. In response to the request, navigation controller 30 may request or automatically receive GPS information from the requesting device 14 or, in some embodiments, GPS information may be automatically transmitted by device 14 in connection with the travel request. Additionally, system 10 may also be configured to automatically monitor and acquire GPS information corresponding to each GPS-enabled device 14 within a particular operating region. The GPS information corresponding to the requesting device 14 and other devices 14 in a particular operating region may be stored as tracking data 72 in database 60. From tracking data 72, navigation guide 50 may determine position data 80 corresponding to the requesting device 14. Additionally, information associated with the travel request received from a particular device 14 may be stored as navigation request data 76 in database 60.

Based on navigation request data 76, route calculator 52 accesses geographic data 70 and position data 80 to determine information corresponding to a current location of device 14 or, alternatively, an origination point 86 for travel, and the desired or designated destination points 88. Additionally, route calculator 52 uses geographic data 70 to identify available navigation routes from the origination point 86 to the desired destination point(s) 88, available navigation routes between destination points 88, and, in some circumstances, available navigation routes from destination point(s) 88 returning to origination point 86. The available navigation routes corresponding to the request may be stored as navigation route data 74 in database 60.

Navigation controller 30 also obtains GPS information associated with other devices 14 in the operating region of the available navigation routes and stores the GPS information as tracking data 72. Using tracking data 72, position data 80 may be determined for each device 14 within the operating region. Additionally, monitoring of position data 80 for each device 14 over time may be used to determine velocity data 82 corresponding to each device 14.

Using tracking data 72 and geographic data 70, navigation guide 50 determines flow rate data 84 for each available navigation route identified by route calculator 52. For example, navigation comparator 58 may access position data 80 for each device 14 to locate each device 14 corresponding to geographic data 70 for the operating region. Navigation comparator 58 identifies particular devices 14 traveling along available navigation routes identified by route calculator 52. For the devices 14 associated with a particular available navigation route, navigation comparator 58 may access velocity data 82 to determine flow rate data 84 for each available navigation route. Navigation comparator 58 may also access geographic data 70 to identify traffic signal locations and other geographic information to correlate movement of particular devices 14 along available navigation routes. Navigation comparator 58 may also acquire information associated with traffic flow rates and patterns from other sources via wired or wireless networks such as, but not limited to, autonomous devices, including traffic monitoring cameras and other types of microelectromechanical system devices, and reporting information from broadcast sources.

Route calculator 52 and navigation comparator 58 may also dynamically cooperate with each other to automatically determine time-optimized navigation routes between origination point 86 and destination point(s) 88 and/or between destination points 88. For example, various types of navigation-solving algorithms may be used to evaluate route patterns from a diverse set of navigation starting points. In some embodiments, route calculator 52 may access geographic data 70 to identify a most direct navigation route from origination point 86 to one of destination points 88 or a most direct navigation route between two destination points 88. For the identified most direct navigation route, navigation comparator 58 determines flow rate data 84. From the most direct navigation route, route calculator 52 may make a series of "indirect turns" away from the most direct route and recompute or revise the navigation route from each "indirect turn." For each recomputed navigation route based on an "indirect turn," navigation comparator 58 recalculates flow rate data 84. This "indirect turn" process may be reiterated until a time-optimized navigation route is determined or until travel time for the navigation route exceeds a particular threshold, such as double the time computed for the most direct route or double the shortest computed travel time for any identified navigation route. However, it should be understood that other methods may be used to dynamically determine time-optimized navigation routes.

Using flow rate data 84 determined for each available navigation route, navigation comparator 58 compares travel times corresponding to each available navigation route. For example, distance calculator 54 may be used to determine the travel distance for each available navigation route. Using flow rate data 84, time calculator 56 may determine a travel time corresponding to the identified distance for each available navigation route. Navigation comparator 58 analyzes the travel times associated with each available navigation route and automatically determines time-optimized routing for each route segment 85 of the requested travel itinerary 71. Navigation comparator 58 also identifies a time-optimized navigation route segment sequence to transmit to the requesting device 14 for the requested travel itinerary 71. The time-optimized navigation route segment sequence and associated travel routes may also be stored as navigation route data 74. Further, navigation comparator 58 may access historical data 77 corresponding to the navigation routes identified by route calculator 52 to determine whether route segment sequence modifications may be advantageous based on historical traffic and flow rate patterns for the various navigation routes. For example, historical data 77 may indicate that particular navigation routes corresponding to the request may become adverse at particular times of the day. Thus, navigation comparator 58 may modify or select a navigation route segment sequence to avoid historically-based adverse traffic conditions. Navigation comparator 58 may also access schedule data 78 to identify scheduled travel conditions affecting any of the available navigation routes to predict travel conditions for the associated navigation routes and select or modify the determined navigation route segment sequence based on schedule data 78.

Historical data 77 may also comprise information associated with "recent" traffic trends or patterns. For example, in some embodiments, only active devices 92 may be monitored such that GPS information for active devices 92 is used to generate tracking data 72. Navigation guide may monitor historical data 77 and/or inventory data 90 to determine whether a sudden increase in a quantity of active devices 92 indicates an adverse traffic condition based on, for example, an increase in call volume from telephone devices 14 located in particular geographic region.

Navigation controller 30 may also be configured to continually monitor the requesting device 14 travel over the identified navigation routes and automatically provide updates to the navigation travel based on changes to tracking data 72 or any other condition associated with the travel itinerary 71 that may adversely affect travel. For example, navigation controller 30 may continue to monitor tracking data 72 for devices 14 traveling along each available navigation route corresponding to the request and, as adverse tracking data 72 conditions arise, update the time-optimized navigation route segment sequence and/or particular navigation route travel directions for a particular route segment 85 provided to the requesting device 14. Thus, as flow rate data 84 changes for a particular navigation route due to adverse travel or traffic conditions, navigation controller 30 may automatically update or change the navigation route between particular points 86 and/or 88 and update or change the route segment sequence for the requested travel itinerary and transmit a new time-optimized navigation route segment sequence and travel instructions to the requesting device 14.

System 10 may also be configured to provide an optimum time period for beginning and/or completing the desired travel itinerary 71. For example, the user may have the option of requesting an immediate departure or specifying a particular time of day for beginning the travel itinerary 71. If the user selects an immediate departure, navigation guide 50 evaluates present and predicted traffic conditions via tracking data 72 and historical data 77 and determines navigation routing instructions and a navigation route segment sequence for the request. If the user selects a future time period for beginning travel, navigation guide . 50 may be configured to determine navigation instructions and a navigation route segment sequence based on historical data 77 to predict traffic conditions for the specified time period and update the navigation instructions and route segment sequence using tracking data 72 as the designated time period approaches. The user may also have the option of requesting navigation guide 50 to identify an optimum origination time for beginning travel for the itinerary 71. Based on historical data 77 and/or tracking data 72, navigation guide 50 may determine a particular time of day for originating or completing the travel itinerary 71 such that travel time is minimized. For example, present traffic conditions as determined from tracking data 72 and/or predicted traffic conditions as determined from historical data 77 may indicate that travel time may be reduced if travel originates at a particular time. Thus, navigation guide 50 may be configured to automatically predict an optimum time for departure for the desired travel itinerary 71 and an optimum navigation route segment sequence and navigation instructions for each route segment 85 for the desired travel itinerary 71.

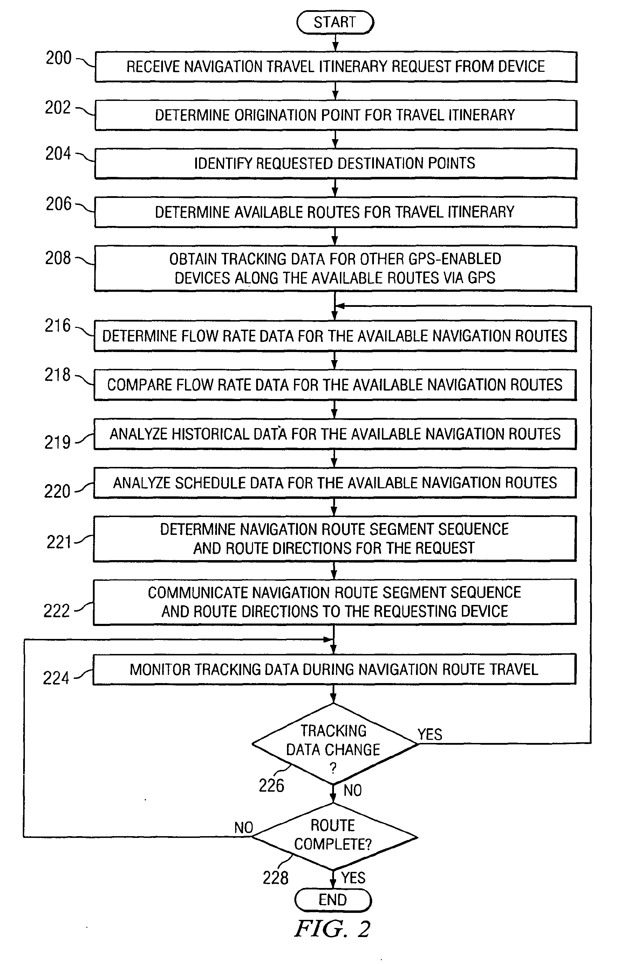

FIGURE 2 is a flow chart illustrating an embodiment of a navigation routing method in accordance with the present invention. The method begins at block 200, where navigation controller 30 receives a request from a particular user of device 14 identifying a travel itinerary 71. As described above, the itinerary 71 may identify travel from an origination point 86 to a plurality of destination points 88, or the itinerary may identify travel from an origination point 86 to one or more destination points 88 and returning to origination point 86. At block 202, navigation guide 50 determines origination point 86 corresponding to the requesting device 14 using GPS information received from the requesting device 14 or a desired origination point 86 as input by the user via input device 22. At block 204, navigation guide 50 identifies the requested or desired destination points 88.

At block 206, route calculator 52 determines available navigation routes corresponding to the request. For example, as described above, route calculator 52 may access geographic data 70 corresponding to the current location of the requesting device 14 and/or an origination point 86 specified by the request. Route calculator 52 may also access geographic data 70 to determine available navigation routes between destination points 88 and between origination point 86 and each destination point 88. At block 208, navigation guide 50 obtains tracking data 72 for other GPS-enabled devices 14 traveling along the identified available navigation routes using GPS information acquired from each of the other devices 14. For example, as described above, using GPS information acquired for each device 14, position data 80 and velocity data 82 may be determined and correlated to each available navigation route.

At block 216, navigation comparator 58 determines flow rate data 84 for each of the available navigation routes. For example, as described above, navigation comparator 58 may access velocity data 82 for devices 14 and correlate each device 14 to a particular available navigation route such that a travel flow rate may be determined for each available navigation route.

At block 218, navigation comparator 58 compares or analyzes the available navigation routes using flow rate data 84. At block 219, navigation comparator 58 accesses historical data 77 to determine historical traffic and/or flow rate patterns for the available navigation routes determined at block 206. At block 220, navigation comparator 58 accesses schedule data 78 to determined scheduled events corresponding to available navigation routes to predict adverse traffic conditions associated with any of the available navigation routes. At block 221, navigation comparator 58 determines a time-optimized navigation route segment sequence and associated travel directions for each route segment 85 of the itinerary 71. At block 222, navigation controller 30 communicates the time-optimized navigation route segment sequence and travel directions for each route segment 85 to the requesting device 14.

At block 224, navigation controller 30 continues to monitor tracking data 72 during navigation route travel by the requesting device 14. At block 226, a determination is made whether tracking data 72 changes exceed a predetermined threshold such that a different navigation route segment sequence or route segment 85 directions may be optimal for the request. If changes to tracking data 72 exceed the predetermined threshold, the method returns to block 216, where navigation guide 50 may automatically re-compute and identify an alternative time-optimized navigation route segment sequence and/or route segment 85 travel directions. If tracking data 72 changes have not exceeded a predetermined threshold, the method proceeds from block 226 to decisional block 228, where a determination is made whether travel for the itinerary 71 is complete. If travel for the itinerary 71 is not complete, the method returns to block 224, where navigation controller 30 continues monitoring tracking data 72.

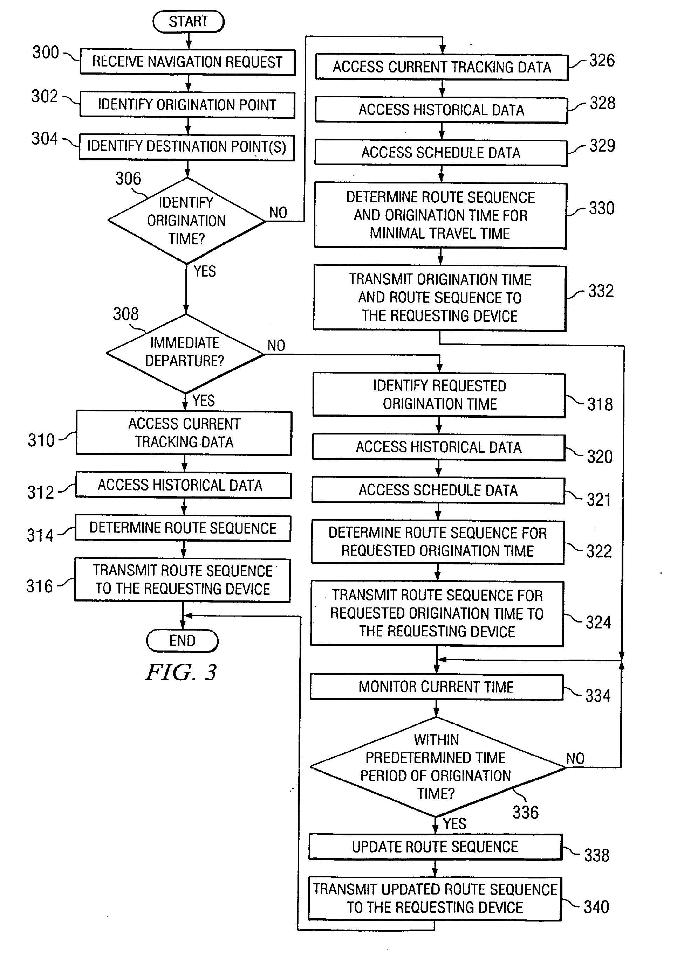

FIGURE 3 is a flow chart illustrating another embodiment of a navigation routing method in accordance with the present invention. The method begins at block 300, where navigation guide 50 receives a navigation request from a user for navigation information for a desired travel itinerary via one of devices 14. At block 302, navigation guide 50 identifies an origination point 86 for the travel itinerary. At block 304, navigation guide 50 identifies the desired or selected destination points 88 for the travel itinerary.

At decisional block 306, a determination is made whether the user of requesting device 14 identified an origination time for beginning the desired travel itinerary. For example, the user may be prompted or have the option of selecting or indicating an immediate departure for the travel itinerary or selecting a desired origination time for beginning the travel itinerary. If the user of the requesting device 14 has identified a desired origination time, the method proceeds from decisional block 306 to decisional block 308, where a determination is made whether the desired origination time corresponds to an immediate departure for the travel itinerary. If an immediate departure for the travel itinerary is desired, the method proceeds from decisional block 308 to block 310, where navigation guide 50 accesses tracking data 72 for current traffic flow conditions corresponding to available navigation routes for the travel itinerary 71. At block 312, navigation guide 50 accesses historical data 77 corresponding to the available navigation routes for the desired travel itinerary 71. At block 314, navigation guide 50 determines a time-optimized route segment sequence for the desired travel itinerary 71. At block 316, the navigation guide 50 transmits the time-optimized route segment sequence to the requesting device 14.

If an immediate departure for the travel itinerary is not desired or designated, the method proceeds from decisional block 308 to block 318, where navigation guide 50 identifies a requested origination time for the travel itinerary 71. For example, the user may have the option of inputting or selecting a desired origination time for beginning travel of the travel itinerary 71. At block 320, navigation guide 50 accesses historical data 77 corresponding to the requested origination time. At block 321, navigation guide 50 accesses schedule data 78 corresponding to the desired origination time. At block 322, navigation guide 50 determines a time-optimized route segment sequence for the travel itinerary 71 for the requested origination time. At block 324, navigation guide 50 transmits the time-optimized route segment sequence for the travel itinerary 71 corresponding to the requested origination time to the requesting device 14. The method then proceeds to block 334.

If the user of the requesting device 14 did not specify or select a particular origination time for beginning the travel itinerary 71 at decisional block 306, the method proceeds from decisional block 306 to block 326, where navigation guide 50 accesses tracking data 72 corresponding to current traffic conditions for the travel itinerary 71. At block 328, navigation guide 50 accesses historical data 77 for the desired travel itinerary 71. At block 329, navigation guide 50 accesses schedule data 78 to identify any scheduled conditions that may adversely affect traffic or travel conditions associated with the travel itinerary 71. At block 330, navigation guide 50 determines a time-optimized route segment sequence and origination time for the desired travel itinerary 71. For example, navigation guide 50 may be configured to compare present traffic conditions as indicated or reflected by tracking data 72 with predicted traffic flow conditions based on historical data 77 and/or schedule data 78 to identify a time-optimized route segment sequence and corresponding origination time for the desired travel itinerary 71. At block 332, navigation guide 50 transmits the time-optimized route segment sequence and origination time for the desired travel itinerary 71 to the requesting device 14.

At block 334, navigation guide 50 monitors the current time to provide updates to the determined time-optimized route-segment sequence and/or origination time. At decisional block 336, a determination is made whether the current time is within a predetermined time period or range relative to an origination time for the travel itinerary 71. If the current time is not within a predetermined time range relative to the origination time, the method returns to block 334. If the current time is within a predetermined time range relative to the origination time for the travel itinerary 71, the method proceeds from decisional block 336 to block 338, where navigation guide 50 updates the time-optimized route segment sequence for the travel itinerary 71. For example, as described above, navigation guide 50 may access tracking data 72, historical data 77, and/or scheduled data 78 to determine and update the time-optimized route segment sequence for the travel itinerary 71. At block 340, navigation guide 50 transmits the updated time-optimized route segment sequence to the requesting device 14.

Thus, embodiments of the present invention provide a time-optimized navigation route segment sequence for a desired travel itinerary 71 and time-optimized travel directions for each route segment 85 of the itinerary 71. The route segment sequence and associated travel directions are determined by analyzing traffic flow rates and patterns via GPS-enabled devices 14 traveling along various navigation routes, evaluating historical traffic conditions along various navigation routes corresponding to a desired itinerary 71, and/or evaluating scheduled conditions affecting a particular travel itinerary 71. The traffic patterns and flow rates may be monitored during travel over a particular itinerary 71 such that real-time updates to the navigation route segment sequence or route segment 85 travel directions may be provided to a user. Embodiments of the present invention may also be configured to provide a time-optimized origination time for a desired travel itinerary and/or provide time-optimized travel instructions for a user-specified origination time. Additionally, it should be understood that in the methods described in FIGURES 2 and 3, certain functions may be omitted, combined, or accomplished in a sequence different than depicted in FIGURES 2 and 3. Also, it should be understood that the methods depicted in FIGURES 2 and 3 may be altered to encompass any of the other features or aspects described elsewhere in the specification.

## Claims

1. A navigation routing system (10) comprising:
a navigation guide (50) adapted to receive a travel itinerary request from a user, the navigation guide (50) adapted to automatically determine a time-optimized origination time for the travel itinerary.

2. The system (10) of Claim 1, wherein the navigation guide (50) determines the time-optimized origination time using historical data (77) associated with the travel itinerary.

3. The system (10) of Claim 1, wherein the navigation guide (50) is adapted to automatically update the origination time in response to a change to at least one condition associated with the travel itinerary.

4. The system (10) of Claim 1, wherein the navigation guide (50) automatically updates the origination time as the origination time falls within a predetermined time range.

5. The system (10) of Claim 1, wherein the navigation guide (50) is adapted to automatically transmit the time-optimized origination time to the user.

6. The system (10) of Claim 1, wherein the navigation guide (50) automatically updates the origination time using tracking data (72) associated with at least one global positioning system (GPS)-enabled device (14) located along the travel itinerary.

7. The system (10) of Claim 1, wherein the navigation guide (50) determines the time-optimized origination time using schedule data (78) associated with the travel itinerary.

8. A navigation routing method, comprising:
receiving a navigation request from a user identifying a travel itinerary; and
automatically determining a time-optimized origination time for the travel itinerary.

9. The method of Claim 8, wherein automatically determining the time-optimized origination time comprises accessing historical data (77) associated with the travel itinerary.

10. The method of Claim 8, further comprising automatically updating the time-optimized origination time as the determined time-optimized origination time falls within a predetermined time range.

11. The method of Claim 8, wherein automatically determining the time-optimized origination time comprises accessing schedule data (78) associated with the travel itinerary.

12. The method of Claim 8, further comprising automatically updating the origination time in response to a change to at least one condition associated with the travel itinerary.

13. The method of Claim 8, further comprising automatically updating the origination time using tracking data (72) acquired from at least one global positioning system (GPS)-enabled device (14) located along the travel itinerary.

14. A navigation routing system (10), comprising:
a navigation guide (50) adapted to receive a navigation request from a user, the navigation request having a travel itinerary and a desired origination time, the navigation guide (50) adapted to automatically determine a time-optimized navigation route for the travel itinerary corresponding to the desired origination time.

15. The system (10) of Claim 14, wherein the navigation guide (50) determines the time-optimized navigation route using historical data (77) corresponding to the travel itinerary.

16. The system (10) of Claim 14, wherein the navigation guide (50) is adapted to automatically update the navigation route as the origination time falls within a predetermined time range.

17. The system (10) of Claim 14, wherein the navigation guide (50) determines the time-optimized navigation route using schedule data (78) associated with the travel itinerary.

18. The system (10) of Claim 14, wherein the travel itinerary comprises a plurality of route segments (85).

19. The system (10) of Claim 14, wherein the navigation guide (50) is adapted to transmit an updated navigation route to the user corresponding to the originating time in response to at least one condition associated with the travel itinerary.
